# EUROPÄISCHE PATENTANMELDUNG

(11) **EP 4 467 297 A1**
(43) Veröffentlichungstag der Anmeldung: **27.11.2024**
(21) Anmeldenummer: 24177343.1
(22) Anmeldetag: 22.05.2024
(51) Int. Cl.: B25J 15/00, B25J 15/06, B25J 9/14, B25J 11/00

(54) **MAGNETGREIFER MIT PNEUMATIKAKTIVIERUNG**

(30) Priorität: 22.05.2023 AT 503982023
(71) Anmelder: TRUMPF Maschinen Austria GmbH & Co. KG., 4061 Pasching (AT)
(72) Erfinder: MAIER, Florian, 4060 Leonding (AT)
(74) Vertreter: Burger, Hannes

(57) **Zusammenfassung**

Die Erfindung betrifft einen Magnetgreifer (9) mit Pneumatikaktivierung umfassend:
ein Gehäuse (11) mit einem Gehäuseboden (12) und einem Kolbenaufnahmehohlraum (14), wobei der Kolbenaufnahmehohlraum (14) durch eine Kolbenaufnahmeinnenfläche (15) begrenzt ist, wobei im Gehäuse (11) ein erster Pneumatikanschluss (26) ausgebildet ist;
einen Kolben (19) mit einem Kolbenkopf (20) und einem Kolbenkörper (22) und einem mit dem Kolbenkörper (22) gekoppelten Permanentmagneten (23),
wobei der Kolben (19) zwischen einer ersten Endposition (28) und einer zweiten Endposition (40) verschiebbar im Kolbenaufnahmehohlraum (14) aufgenommen ist.

Weiters ist eine Druckfeder (31) ausgebildet, welche in der zweiten Endposition (40) des Kolbens (19) komprimiert ist und auf den Kolben (19) wirkt, wobei die Druckfeder (31) den Kolben (19) in eine Zwischenposition (41) zwischen der ersten Endposition (28) und der zweiten Endposition (40) drängt, wobei die Druckfeder (31) derart ausgebildet ist, dass sie den Kolben (19) nicht über die Zwischenposition (41) hinaus zur ersten Endposition (28) drängt.

## Beschreibung

Die Erfindung betrifft einen Magnetgreifer mit Pneumatikaktivierung, sowie eine mit dem Magnetgreifer ausgestattete Fertigungsanlage, sowie ein Verfahren zum Abheben eines ferromagnetischen Blechwerkstückes von einem Blechstapel und Manipulieren des Blechwerkstückes.

Aus dem Stand der Technik sind diverse Hebemittel zum Heben und Manipulieren von Blechwerkstücken bekannt. Unter anderem ist es bekannt die Blechwerkstücken mittels Magnetgreifer zu manipulieren.

Die CN105196210A offenbart einen derartigen Magnetgreifer. Der Magnetgreifer lässt sich mittels Pneumatik aktivieren oder deaktivieren. Ein derartiger Magnetgreifer muss im aktivierten Zustand hinsichtlich dessen Haltekraft bei der Verwendung in einer Fertigungsanlage mit einer Biegemaschine zum sicheren Halten während dem Biegevorgang auf das Vielfache, insbesondere auf das Achtfache, der statischen Hebekraft ausgelegt werden.

Dünne Blechwerkstücke haben eine geringe Masse und das überdimensionierte magnetische Feld wirkt beim Abheben des Blechwerkstückes von einem Blechstapel nicht nur auf das oben liegende Blech, sondern auch auf das zweite Blech und bei entsprechend kleinen Blechstärken auch auf weitere Bleche. Dies führt dazu, dass unerwünscht mehrere Bleche gleichzeitig abgehoben werden.

Aufgabe der vorliegenden Erfindung war es, die Nachteile des Standes der Technik zu überwinden und einen Magnetgreifer und ein Verfahren zur Verfügung zu stellen, mittels dem Bleche einzeln abgehoben werden können.

Diese Aufgabe wird durch eine Vorrichtung und ein Verfahren gemäß den Ansprüchen gelöst.

Erfindungsgemäß ist ein Magnetgreifer mit Pneumatikaktivierung vorgesehen. Der Magnetgreifer umfasst:
ein Gehäuse mit einem Gehäuseboden und einem Kolbenaufnahmehohlraum, wobei der Kolbenaufnahmehohlraum durch eine Kolbenaufnahmeinnenfläche begrenzt ist, wobei im Gehäuse ein erster Pneumatikanschluss ausgebildet ist, welcher in den Kolbenaufnahmehohlraum einmündet, wobei an einer Außenseite des Gehäusebodens eine Werkstückanlagefläche ausgebildet ist;
einen Kolben mit einem Kolbenkopf und einem Kolbenkörper und einem mit dem Kolbenkörper gekoppelten Permanentmagneten, wobei am Kolbenkopf eine Kolbendichtung angeordnet ist, welche zwischen dem Kolbenkopf und der Kolbenaufnahmeinnenfläche wirkt,
wobei der Kolben zwischen einer ersten Endposition und einer zweiten Endposition verschiebbar im Kolbenaufnahmehohlraum aufgenommen ist, wobei der Kolbenaufnahmehohlraum durch den Kolbenkopf in eine erste Kolbenkammer und eine zweite Kolbenkammer geteilt ist, wobei der Permanentmagnet in der zweiten Endposition des Kolbens am Gehäuseboden anliegt. Weiters ist eine Druckfeder ausgebildet, welche in der zweiten Endposition des Kolbens komprimiert ist und auf den Kolben wirkt, wobei die Druckfeder den Kolben in eine Zwischenposition zwischen der ersten Endposition und der zweiten Endposition drängt, wobei die Druckfeder derart ausgebildet ist, dass sie den Kolben nicht über die Zwischenposition hinaus zur ersten Endposition drängt.

Der erfindungsgemäße Magnetgreifer bringt den überraschenden Vorteil mit sich, dass die Magnetkraft geschwächt werden kann und der Magnetgreifer dabei einen sehr einfachen Aufbau aufweist und mit Pneumatik aktiviert werden kann. Auch die Möglichkeit der Ansteuerung des Magnetgreifers ist sehr einfach. Dies kann dadurch erreicht werden, dass die Magnetkraft drei verschiedene Zustände einnehmen kann. In einem ersten Zustand, wenn sich der Kolben in der ersten Endposition befindet, kann die Magnetkraft so gering sein, dass das Blechwerkstück nicht an der Werkstückanlagefläche anhaftet. In einem zweiten Zustand, wenn sich der Kolben in der zweiten Endposition befindet, kann die Magnetkraft so groß sein, dass das Blechwerkstück mit vielfacher Sicherheit an der Werkstückanlagefläche anhaftet. Im dritten Zustand, wenn sich der Kolben in der Zwischenposition befindet, kann die Magnetkraft einen Mittelwert einnehmen, sodass das Blechwerkstück an der Werkstückanlagefläche anhaftet und angehoben werden kann, jedoch keine weiteren Blechwerkstücke mit angehoben werden. Somit können einzelne Blechwerkstücke von einem Blechstapel gegriffen werden und in einem späteren Prozessschritt eines Biegevorganges in einer Biegemaschine mit mehrfacher Mindesthaltekraft gehalten werden. Darüber hinaus kann ein derart ausgebildeter Magnetgreifer einen einfachen Aufbau aufweisen. Ein weiterer Vorteil ist, dass die drei Zustände des Magnetgreifers entweder mit nur einem Pneumatikanschluss, welcher mit Überdruck und Unterdruck beaufschlagt werden kann, geschalten werden kann, oder mit nur zwei Pneumatikanschlüssen geschalten werden kann, welche beide unabhängig voneinander mit Überdruck beaufschlagt werden können oder alternativ beide unabhängig voneinander mit Unterdruck beaufschlagt werden können.

Weiters kann es zweckmäßig sein, wenn die Druckfeder zwischen dem Kolbenkopf und dem Gehäuseboden innerhalb des Kolbenaufnahmehohlraumes positioniert ist. Dies bringt den Vorteil mit sich, dass durch diese Maßnahme die drei Zustände des Magnetgreifers einfach geschalten werden können.

Ferner kann vorgesehen sein, dass am Kolbenkörper eine Anschlagringaufnahme ausgebildet ist, wobei ein Anschlagring verschiebbar an der Anschlagringaufnahme aufgenommen ist, wobei am Kolbenkörper eine Anschlagringbegrenzung ausgebildet ist, wobei zwischen dem Anschlagring und dem Kolbenkopf eine Druckfeder angeordnet ist, wobei die Druckfeder den Anschlagring gegen die Anschlagringbegrenzung drückt,
wobei im Kolbenaufnahmehohlraum eine Abstufung ausgebildet ist, wobei in der Zwischenposition des Kolbens der Anschlagring an der Abstufung anliegt und der Anschlagring an der Anschlagringbegrenzung anliegt und wobei in der zweiten Endposition des Kolbens der Anschlagring an der Abstufung anliegt und der Anschlagring in einem Abstand von der Anschlagringbegrenzung entfernt ist. Ein derartiger Aufbau lässt sich einfach realisieren und bringt darüber hinaus den Vorteil mit sich, dass der Kolben von der zweiten Endposition in die Zwischenposition verschoben werden kann, wenn der Pneumatikdruck entfernt wird.

In einer alternativen Ausführungsvariante kann vorgesehen sein, dass im Kolbenaufnahmehohlraum ein Anschlag ausgebildet ist, wobei die Druckfeder im Kolbenaufnahmehohlraum zwischen dem Anschlag und dem Gehäuseboden positioniert ist und wobei im Kolbenaufnahmehohlraum ein Anlagering angeordnet ist, wobei die Druckfeder den Anlagering gegen den Anschlag drückt,
wobei in der Zwischenposition des Kolbens der Anlagering am Anschlag anliegt und wobei in der zweiten Endposition des Kolbens der Anlagering am Kolbenkopf anliegt und der Anlagering in einem Abstand vom Anschlag entfernt ist. Ein derartiger Aufbau lässt sich einfach realisieren und bringt darüber hinaus den Vorteil mit sich, dass der Kolben von der zweiten Endposition in die Zwischenposition verschoben werden kann, wenn der Pneumatikdruck entfernt wird.

In einer weiteren alternativen Ausführungsvariante kann vorgesehen sein, dass am Kolbenkörper eine Druckfeder angeordnet ist, wobei die Druckfeder am Kolbenkopf befestigt ist,
wobei im Kolbenaufnahmehohlraum eine Abstufung ausgebildet ist, wobei in der Zwischenposition des Kolbens die Druckfeder an der Abstufung anliegt und wobei in der zweiten Endposition des Kolbens die Druckfeder an der Abstufung anliegt und komprimiert ist. Ein derartiger Aufbau lässt sich einfach realisieren und bringt darüber hinaus den Vorteil mit sich, dass der Kolben von der zweiten Endposition in die Zwischenposition verschoben werden kann, wenn der Pneumatikdruck entfernt wird.

Gemäß einer Weiterbildung ist es möglich, dass das Gehäuse an der zum Gehäuseboden abgewandten Seite mit einem Deckel verschlossen ist. Dies bringt den Vorteil mit sich, dass ein derart ausgebildeter Magnetgreifer einfach hergestellt werden kann.

Ferner kann es zweckmäßig sein, dass der erste Pneumatikanschluss in die erste Kolbenkammer einmündet und dass ein zweiter Pneumatikanschluss ausgebildet ist, welcher in eine zweite Kolbenkammer einmündet. Dies bringt den Vorteil mit sich, dass durch wahlweises Aufbringen eines Überdruckes auf den ersten Pneumatikanschluss oder auf den zweiten Pneumatikanschluss der Kolben zwischen der ersten Endposition, der zweiten Endposition und der Zwischenposition verschoben werden kann.

Darüber hinaus kann vorgesehen sein, dass die Druckfeder derart positioniert ist, dass der Kolben in der Zwischenposition verbleibt, wenn in der ersten Kolbenkammer und in der zweiten Kolbenkammer Umgebungsdruck herrscht. Dies bringt den Vorteil mit sich, dass der Magnetgreifer als doppelt wirkender Pneumatikzylinder aufgebaut sein kann und dabei drei Positionen des Kolbens stabil gehalten werden können.

Insbesondere kann vorgesehen sein, dass der Kolben in der Zwischenposition verbleibt bzw. stabil gehalten werden kann, wenn ein Blechwerkstück an der Werkstückanlagefläche anhaftet. Hierbei kann der Kolben durch die Magnetkraft des Permanentmagneten in Richtung zur Werkstückanlagefläche gezogen werden. Die Druckfeder wird hierbei mit der Amplitude der Magnetkraft komprimiert, wodurch sich ein stabiler Zustand einstellt. Dieser stabile Zustand kann auch dann gehalten werden, wenn der Magnetgreifer auf den Kopf gestellt wird und der Kolben dadurch von der Schwerkraft von der Werkstückanlagefläche weggezogen wird, da die Magnetkraft größer ist als die Gewichtskraft des Kolbens. Wenn kein Blechwerkstück an der Werkstückanlagefläche anhaftet, kann die Magnetkraft, die den Kolben zur Werkstückanlagefläche zieht, etwas geringer sein.

Weiters kann vorgesehen sein, dass am Kolbenkörper eine Aufnahmenut ausgebildet ist, wobei die Anschlagringbegrenzung in Form eines Sicherungsringes ausgebildet ist, wobei der Sicherungsring in der Aufnahmenut aufgenommen ist. Durch diese Maßnahme kann die Druckfeder einfach am Kolbenköper aufgenommen bzw. positioniert werden. Ein derartiger Aufbau lässt sich einfach umsetzten und weist eine geringe Fehleranfälligkeit auf.

Gemäß einer besonderen Ausprägung ist es möglich, dass eine Außenmantelfläche des Anschlagringes an der Kolbenaufnahmeinnenfläche geführt ist und dass eine Innenmantelfläche des Anschlagringes am Kolbenkörper geführt ist. Dies bringt den Vorteil mit sich, dass der Kolben durch diese Maßnahme zusätzlich geführt werden kann. Somit kann der Kolben gegen unerwünschtes Verkanten geschützt sein.

Entsprechend einer vorteilhaften Weiterbildung kann vorgesehen sein, dass der Kolben rotationssymmetrisch ausgebildet ist, wobei der Kolbenkopf einen Kolbenkopfdurchmesser aufweist, wobei der Kolbenkörper einen Kolbenkörperdurchmesser aufweist, wobei der Kolbenkopfdurchmesser größer ist als der Kolbenkörperdurchmesser. Dies bringt den Vorteil mit sich, dass ein derartig ausgebildeter Kolben einfach herzustellen ist.

Erfindungsgemäß ist eine Fertigungsanlage ausgebildet. Die Fertigungsanlage umfasst:
eine Bearbeitungsmaschine, insbesondere eine Biegemaschine;
einen Manipulationsroboter mit zumindest einem Magnetgreifer. Der Magnetgreifer ist nach einer der oben beschriebenen Ausprägungen ausgebildet.

Die erfindungsgemäße Fertigungsanlage bringt den Vorteil mit sich, dass damit Blechwerkstücke einfach von einem Blechstapel abgenommen werden können und anschließend in der Bearbeitungsmaschine bearbeitet werden können, insbesondere in der Biegemaschine gebogen werden können. Der Manipulationsroboter und der Magnetgreifer können einen einfachen Aufbau aufweisen. Natürlich sind auch die Vorteile des erfindungsgemäßen Magnetgreifers selbst gleichzeitig Vorteile der erfindungsgemäßen Fertigungsanlage.

Erfindungsgemäß ist ein Verfahren zum Abheben eines Blechwerkstückes von einem Blechstapel und Manipulieren des Blechwerkstückes vorgesehen. Das Verfahren umfasst die Verfahrensschritte:
- Bereitstellen eines Magnetgreifers mit Pneumatikaktivierung umfassend:
   ein Gehäuse mit einem Gehäuseboden und einem Kolbenaufnahmehohlraum, wobei der Kolbenaufnahmehohlraum durch eine Kolbenaufnahmeinnenfläche begrenzt ist, wobei im Gehäuse ein erster Pneumatikanschluss ausgebildet ist, welcher in den Kolbenaufnahmehohlraum einmündet, wobei an einer Außenseite des Gehäusebodens eine Werkstückanlagefläche ausgebildet ist;
   einen Kolben mit einem Kolbenkopf und einem Kolbenkörper und einem mit dem Kolbenkörper gekoppelten Permanentmagneten, wobei am Kolbenkopf eine Kolbendichtung angeordnet ist, welche zwischen dem Kolbenkopf und der Kolbenaufnahmeinnenfläche wirkt,
   wobei der Kolben zwischen einer ersten Endposition und einer zweiten Endposition verschiebbar im Kolbenaufnahmehohlraum aufgenommen ist, wobei der Kolbenaufnahmehohlraum durch den Kolbenkopf in eine erste Kolbenkammer und eine zweite Kolbenkammer geteilt ist, wobei der Permanentmagnet in der zweiten Endposition des Kolbens am Gehäuseboden anliegt, wobei eine Druckfeder ausgebildet ist, welche in der zweiten Endposition des Kolbens komprimiert ist und auf den Kolben wirkt, wobei die Druckfeder den Kolben in eine Zwischenposition zwischen der ersten Endposition und der zweiten Endposition drängt, wobei die Druckfeder derart ausgebildet ist, dass sie den Kolben nicht über die Zwischenposition hinaus zur ersten Endposition drängt;
- Beaufschlagen des ersten Pneumatikanschlusses mit Druckluft, wodurch der Kolben in die zweite Endposition verschoben wird;
- Entfernen der Druckluftbeaufschlagung vom ersten Pneumatikanschluss, oder Anlegen einer Druckbeaufschlagung auf einen zweiten Pneumatikanschluss, wodurch der Kolben mittels der Druckfeder in die Zwischenposition verschoben wird;
- Anlegen der Werkstückanlagefläche an das Blechwerkstück;
- Abheben des Blechwerkstückes vom Blechstapel mittels des Magnetgreifers, wenn sich der Kolben in der Zwischenposition befindet;
- Nach dem Abheben des Blechwerkstückes vom Blechstapel nochmaliges Beaufschlagen des ersten Pneumatikanschlusses mit Druckluft, wodurch der Kolben in die zweite Endposition verschoben wird.

Das erfindungsgemäße Verfahren bringt den Vorteil mit sich, dass beim Abheben des Blechwerkstückes von einem Blechstapel am Magnetgreifer eine reduzierte Magnetkraft vorliegen kann, sodass nur ein einzelnes Blechwerkstück gegriffen wird. Beim Anschließenden Manipulieren des Blechwerkstückes kann die Haltekraft erhöht werden, sodass das Blechwerkstück sicher gehalten werden kann. Dies bringt den Vorteil einer erhöhten Arbeitssicherheit mit sich. Natürlich sind auch die Vorteile des erfindungsgemäßen Magnetgreifers selbst gleichzeitig Vorteile des erfindungsgemäßen Verfahrens.

Darüber hinaus kann vorgesehen sein, dass zum Ablegen des Blechwerkstückes der erste Pneumatikanschluss mit Unterdruck beaufschlagt wird, wodurch der Kolben in die erste Endposition verschoben wird. Dies bringt den Vorteil mit sich, dass nur ein einzelner Pneumatikanschluss benötigt wird, um die drei Zustände des Magnetgreifers realisieren zu können.

Vorteilhaft ist auch eine Ausprägung, gemäß welcher vorgesehen sein kann, dass zum Ablegen des Blechwerkstückes die Druckluftbeaufschlagung vom ersten Pneumatikanschluss entfernt wird und dass der zweite Pneumatikanschluss mit Druckluft beaufschlagt wird, wodurch der Kolben in die erste Endposition verschoben wird. Dies bringt den Vorteil mit sich, dass durch diese Maßnahme die drei Zustände des Magnetgreifers einfach eingestellt werden können, wenn zwei Pneumatikanschlüsse vorhanden sind.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel einer Fertigungsanlage;
- Fig. 2: ein erstes Ausführungsbeispiel eines Magnetgreifers in einem Längsschnitt, wobei sich ein Kolben in einer ersten Endposition befindet;
- Fig. 3: das erste Ausführungsbeispiel des Magnetgreifers in einem Längsschnitt, wobei sich der Kolben in einer zweiten Endposition befindet;
- Fig. 4: das erste Ausführungsbeispiel des Magnetgreifers in einem Längsschnitt, wobei sich der Kolben in einer Zwischenposition befindet;
- Fig. 5: ein zweites Ausführungsbeispiel des Magnetgreifers in einem Längsschnitt, wobei sich der Kolben in der ersten Endposition befindet;
- Fig. 6: das zweite Ausführungsbeispiel des Magnetgreifers in einem Längsschnitt, wobei sich der Kolben in der zweiten Endposition befindet;
- Fig. 7: das zweite Ausführungsbeispiel des Magnetgreifers in einem Längsschnitt, wobei sich der Kolben in der Zwischenposition befindet;
- Fig. 8: ein drittes Ausführungsbeispiel des Magnetgreifers in einem Längsschnitt, wobei sich der Kolben in der ersten Endposition befindet;
- Fig. 9: das dritte Ausführungsbeispiel des Magnetgreifers in einem Längsschnitt, wobei sich der Kolben in der zweiten Endposition befindet;
- Fig. 10: das dritte Ausführungsbeispiel des Magnetgreifers in einem Längsschnitt, wobei sich der Kolben in der Zwischenposition befindet.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

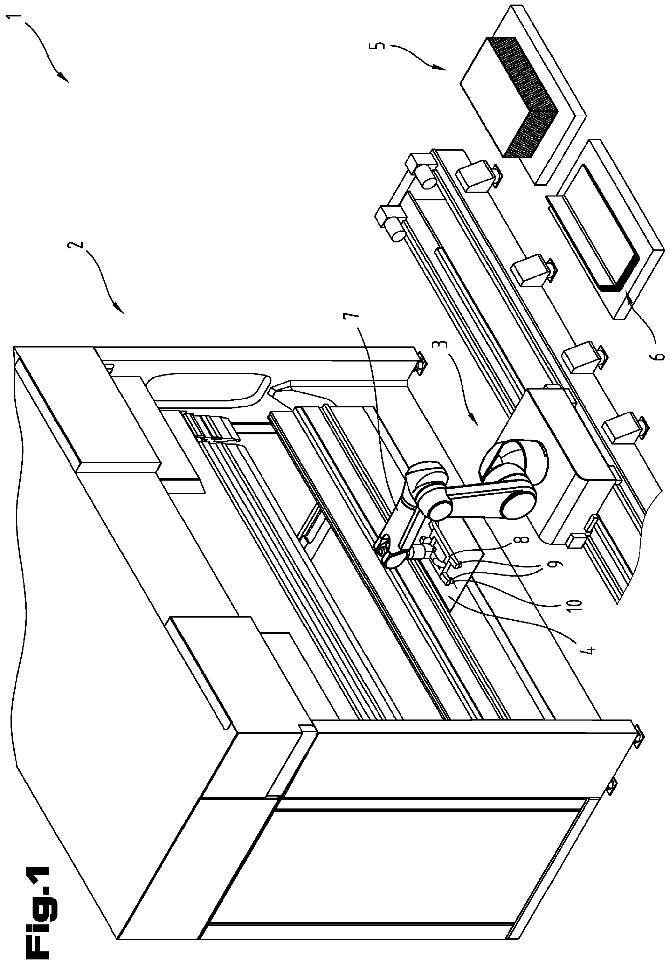

In Fig. 1 ist eine schematische Darstellung eines Ausführungsbeispiels einer Fertigungsanlage 1 ersichtlich. Die Fertigungsanlage 1 kann eine Bearbeitungsmaschine 2 umfassen. Die Bearbeitungsmaschine 2 kann als Biegemaschine ausgebildet sein. Insbesondere kann vorgesehen sein, dass die Bearbeitungsmaschine 2 als Abkantpresse ausgebildet ist.

Weiters kann vorgesehen sein, dass ein Manipulationsroboter 3 ausgebildet ist, welcher zum Manipulieren bzw. Bewegen von Blechwerkstücken 4 dient. Insbesondere kann vorgesehen sein, dass der Manipulationsroboter 3 dazu ausgebildet ist, um die Blechwerkstücke 4 von einem Blechstapel 5 abzunehmen, der Bearbeitungsmaschine 2 zur Bearbeitung zuzuführen und anschließend an einem Fertigteilstapel 6 abzulegen.

Wie aus Fig. 1 ersichtlich, kann vorgesehen sein, dass der Manipulationsroboter 3 als mehrachsig beweglicher Manipulator bzw. Roboter ausgebildet ist. Insbesondere kann vorgesehen sein, dass der Manipulationsroboter 3 als Knickarmroboter ausgebildet ist.

Insbesondere kann vorgesehen sein, dass an einem Tragarm 7 ein Tragteil 8 angeordnet ist. Am Tragteil 8 kann ein Magnetgreifer 9 zum Halten des Blechwerkstückes 4 angeordnet sein. Am Tragteil 8 können auch eine Mehrzahl von Magnetgreifern 9 zum Halten des Blechwerkstückes 4 angeordnet sein, welche zueinander beabstandet am Tragteil 8 angeordnet sind.

Insbesondere kann vorgesehen sein, dass die einzelnen Magnetgreifer 9 eine Werkstückanlagefläche 10 aufweisen können, an welchen das Blechwerkstück 4 im gehaltenen Zustand anliegen kann. Das Blechwerkstück 4 kann hierbei durch eine Magnetkraft an der Werkstückanlagefläche 10 gehalten werden bzw. an dieser anhaften.

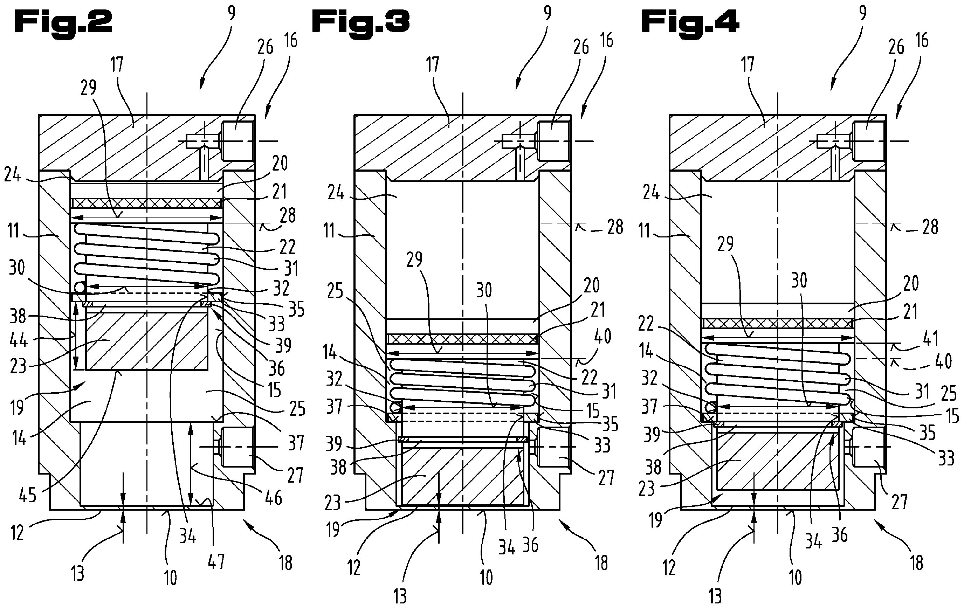

In den Figuren 2 bis 4 ist ein erstes Ausführungsbeispiel des Magnetgreifers 9 in verschiedenen Positionen dargestellt.

Wie aus Fig. 2 ersichtlich, kann vorgesehen sein, dass der Magnetgreifer 9 ein Gehäuse 11 umfasst. Das Gehäuse 11 kann einen Gehäuseboden 12 aufweisen, an welchem die Werkstückanlagefläche 10 ausgebildet sein kann. Insbesondere kann vorgesehen sein kann, dass der Gehäuseboden 12 eine geringe Wandstärke 13 aufweist. Weiters kann vorgesehen sein, dass das Gehäuse 11 in dessen Grundstruktur rotationssymmetrisch ausgebildet ist.

Der Gehäuseboden 12 kann eine Wandstärke 13 zwischen 0,1 mm und 10 mm, insbesondere zwischen 0,5 mm und 5 mm, bevorzugt zwischen 1 mm und 3 mm aufweisen.

Weiters kann vorgesehen sein, dass im Gehäuse 11 ein Kolbenaufnahmehohlraum 14 ausgebildet ist. Der Kolbenaufnahmehohlraum 14 kann eine Kolbenaufnahmeinnenfläche 15 aufweisen. Insbesondere kann vorgesehen sein, dass das Gehäuse 11 als Hohlzylinder ausgebildet ist. An einer ersten Gehäuseseite 16 kann das Gehäuse 11 einen Deckel 17 umfassen.

In anderen, nicht dargestellten Ausführungsbeispielen kann das Gehäuse 11 auch an anderer Stelle geteilt sein, sodass der Kolbenaufnahmehohlraum 14 einfach gefertigt werden kann bzw. von außen zugänglich ist. An einer zweiten Gehäuseseite 18 kann der Gehäuseboden 12 ausgebildet sein.

Weiters kann vorgesehen sein, dass der Magnetgreifer 9 einen Kolben 19 umfasst, welcher im Kolbenaufnahmehohlraum 14 aufgenommen sein kann. Der Kolben 19 kann einen Kolbenkopf 20 aufweisen. Insbesondere kann vorgesehen sein, dass der Kolbenkopf 20 verschiebbar im Kolbenaufnahmehohlraum 14 aufgenommen ist, wobei der Kolbenkopf 20 an der Kolbenaufnahmeinnenfläche 15 anliegen kann und gasdicht mit der Kolbenaufnahmeinnenfläche 15 zusammenwirken kann. Insbesondere kann vorgesehen sein, dass am Kolbenkopf 20 eine Kolbendichtung 21 angeordnet ist, welche zur verschiebbaren Abdichtung des Kolbenkopfes 20 mit der Kolbenaufnahmeinnenfläche 15 dienen kann.

Weiters kann vorgesehen sein, dass der Kolben 19 einen Kolbenkörper 22 umfasst, welcher mit dem Kolbenkopf 20 gekoppelt ist. Insbesondere kann vorgesehen sein, dass der Kolbenkopf 20 und der Kolbenkörper 22 einteilig ausgebildet sind.

Weiters kann vorgesehen sein, dass am Kolbenkörper 22 ein Permanentmagnet 23 ausgebildet bzw. angeordnet ist. Der Permanentmagnet 23 kann durch unterschiedlichste Verbindungen mit dem Kolbenkörper 22 gekoppelt sein. Dies kann beispielsweise eine stoffschlüssige Verbindung sein. Weiters ist es auch denkbar, dass der Permanentmagnet 23 mittels einer Schraubverbindung mit dem Kolbenkörper 22 gekoppelt ist. Außerdem ist es denkbar, dass der Permanentmagnet 23 mittels einer formschlüssigen Verbindung mit dem Kolbenkörper 22 gekoppelt ist.

Weiters ist es auch denkbar, dass der Kolbenkörper 22 und der Permanentmagnet 23 einteilig ausgebildet sind bzw. dass der Kolbenkörper 22 als Ganzes als Permanentmagnet ausgebildet ist.

Wie aus Fig. 2 weiters ersichtlich, kann vorgesehen sein, dass der Kolbenkopf 20 den Kolbenaufnahmehohlraum 14 in eine erste Kolbenkammer 24 und eine zweite Kolbenkammer 25 teilt.

Weiters kann vorgesehen sein, dass im Gehäuse 11 ein erster Pneumatikanschluss 26 ausgebildet ist. Der erste Pneumatikanschluss 26 kann in die erste Kolbenkammer 24 einmünden.

Weiters kann vorgesehen sein, dass im Gehäuse 11 ein zweiter Pneumatikanschluss 27 ausgebildet ist. Der zweite Pneumatikanschluss 27 kann in die zweite Kolbenkammer 25 einmünden.

Der erste Pneumatikanschluss 26 und der zweite Pneumatikanschluss 27 können zum Anschluss des Magnetgreifers 9 an ein Druckluftsystem dienen. Insbesondere kann vorgesehen sein, dass im Druckluftsystem zum ersten Pneumatikanschluss 26 und zum zweiten Pneumatikanschluss 27 jeweils ein Ventil vorgeschalten ist, sodass der erste Pneumatikanschluss 26 und der zweite Pneumatikanschluss 27 selektiv mit Druckluft beaufschlagt werden können.

In der Darstellung nach Fig. 2 befindet sich der Kolben 19 in einer ersten Endposition 28 in welcher der Permanentmagnet 23 in einem Maximalabstand vom Gehäuseboden 12 beabstandet ist. Das Volumen der ersten Kolbenkammer 24 weist hierbei ein Minimum auf und das Volumen der zweiten Kolbenkammer 25 weist ein Maximum auf. Die Magnetkraft an der Werkstückanlagefläche 10 ist hierbei minimal.

Wie aus Fig. 2 weiters ersichtlich, kann vorgesehen sein, dass der Kolbenkopf 20 einen Kolbenkopfdurchmesser 29 aufweist. Der Kolbenkörper 22 kann einen Kolbenkörperdurchmesser 30 aufweisen. Insbesondere kann vorgesehen sein, dass der Kolbenkörperdurchmesser 30 kleiner ist als der Kolbenkopfdurchmesser 29.

Wie aus Fig. 2 weiters ersichtlich, kann vorgesehen sein, dass am Kolbenkörper 22 eine Druckfeder 31 aufgenommen ist. Darüber hinaus kann vorgesehen sein, dass am Kolbenkörper 22 eine Anschlagringaufnahme 32 ausgebildet ist, an welcher ein Anschlagring 33 aufgenommen sein kann. Der Anschlagring 33 kann eine Innenmantelfläche 34 aufweisen, welche mit der Anschlagringaufnahme 32 korrespondieren kann. Insbesondere kann vorgesehen sein, dass die Innenmantelfläche 34 des Anschlagringes 33 mit der Anschlagringaufnahme 32 eine Gleitverbindung bildet. Weiters kann vorgesehen sein, dass der Anschlagring 33 eine Außenmantelfläche 35 aufweist. Die Außenmantelfläche 35 des Anschlagringes 33 kann an der Kolbenaufnahmeinnenfläche 15 anliegen und in Form einer Gleitverbindung in dieser geführt sein.

Weiters kann vorgesehen sein, dass am Kolbenkörper 22 eine Anschlagringbegrenzung 36 ausgebildet ist, welche zur Begrenzung der Bewegung des Anschlagringes 33 dient. Durch die Anschlagringbegrenzung 36 kann erreicht werden, dass der Anschlagring 33 am Kolbenkörper 22 gehalten wird. Weiters kann vorgesehen sein, dass die Druckfeder 31 zwischen dem Anschlagring 33 und dem Kolbenkopf 20 angeordnet ist. Insbesondere kann vorgesehen sein, dass sich die Druckfeder 31 am Kolbenkopf 20 abstützt und somit den Anschlagring 33 gegen die Anschlagringbegrenzung 36 drückt.

Weiters kann vorgesehen sein, dass im Kolbenaufnahmehohlraum 14 eine Abstufung 37 ausgebildet ist. Die Abstufung 37 kann derart im Kolbenaufnahmehohlraum 14 positioniert sein, dass der Anschlagring 33 mit der Abstufung 37 in Anlage gebracht werden kann.

Weiters kann vorgesehen sein, dass der Anschlagring 33 in jenem Zustand in dem er an der Anschlagringbegrenzung 36 anliegt in einem ersten Abstand 44 zu einer Stirnfläche 45 des Permanentmagneten angeordnet ist. Die Abstufung 37 kann in einem zweiten Abstand 46 zu einer Innenfläche 47 des Gehäusebodens 12 angeordnet sein. Insbesondere kann vorgesehen sein, dass der ersten Abstand 44 kleiner ist, als der zweite Abstand 46.

Wie in Fig. 2 weiters ersichtlich, kann vorgesehen sein, dass am Kolbenkörper 22 eine Aufnahmenut 38 ausgebildet ist. Die Aufnahmenut 38 kann zur Aufnahme eines Sicherungsringes 39 dienen. Der Sicherungsring 39 kann hierbei als Anschlagringbegrenzung 36 wirken.

Anhand der Fig. 2 bis 4 wird nun die Funktion des Magnetgreifers 9 erklärt.

In der ersten Endposition 28 des Kolbens 19, wie aus Fig. 2 ersichtlich, ist der Permanentmagnet 23 zum Gehäuseboden 12 beabstandet, wodurch in der Werkstückanlagefläche 10 keine Magnetkraft oder nur eine sehr geringe Magnetkraft wirkt.

Um den Magnetgreifer 9 nun zu aktivieren, wird der erste Pneumatikanschluss 26 mit Druckluft beaufschlagt, welche in die erste Kolbenkammer 24 einströmt und somit den Kolben 19 in Richtung der zweiten Endposition 40 verschiebt. Hierbei kommt der Anschlagring 33 an der Abstufung 37 zur Anlage und wird am Kolbenkörper 22, insbesondere an der Anschlagringaufnahme 32, zum Kolbenkopf 20 hin verschoben. Dies passiert entgegen der Federkraft der Druckfeder 31, welche durch die Verschiebung komprimiert und somit weiter vorgespannt wird.

Wenn sich der Kolben 19 in der zweiten Endposition 40 befindet, wie aus Fig. 3 ersichtlich, ist der Permanentmagnet 23 im Nahbereich des Gehäusebodens 12 angeordnet bzw. liegt am Gehäuseboden 12 an. Dadurch wirkt an der Werkstückanlagefläche 10 die maximale Magnetkraft.

Um die Magnetkraft an der Werkstückanlagefläche 10 zu verringern, kann der erste Pneumatikanschluss 26 drucklos geschalten werden. Hierbei wird der Kolben 19 durch die Wirkung der Federkraft der Druckfeder 31 in Richtung der ersten Endposition 28 verschoben, wobei die Verschiebung nur so weit erfolgen kann, bis der Anschlagring 33 an der Anschlagringbegrenzung 36 anliegt. Dadurch stellt sich eine Zwischenposition 41 ein, wie diese in Fig. 4 dargestellt ist. Hierbei liegt an der Werkstückanlagefläche 10 ein geschwächtes Magnetfeld an. Die tatsächliche Lage der Zwischenposition 41 ergibt sich aus der Differenz des ersten Abstandes 44 und des zweiten Abstandes 46.

Zum Abheben des Blechwerkstückes 4 vom Blechstapel 5 kann der Kolben 19 in die Zwischenposition 41 positioniert werden, wie dies in Fig. 4 dargestellt ist. Durch das geschwächte Magnetfeld kann erreicht werden, dass nur ein einzelnes Blechwerkstück 4 vom Blechstapel 5 abgehoben wird. Sobald das Blechwerkstück 4 vom Blechstapel 5 angehoben ist und ausreichend zum Blechstapel 5 beabstandet ist, kann am ersten Pneumatikanschluss 26 ein Druck aufgebracht werden, wodurch der Kolben 19 in die zweite Endposition 28 verschoben wird, wie dies in Fig. 3 dargestellt ist. Durch diese Maßnahme kann die Haltekraft des Magnetgreifers 9 erhöht werden. Dieser Zustand mit erhöhter Haltekraft kann insbesondere dann verwendet werden, wenn das Blechwerkstück 4 in der Bearbeitungsmaschine 2 gebogen wird und dabei gleichzeitig vom Manipulationsroboter 3 gehalten wird.

Nach der Beendigung des Bearbeitungsvorganges kann die Druckluftbeaufschlagung des ersten Pneumatikanschlusses 26 gestoppt werden und der zweite Pneumatikanschluss 27 mit Druckluft beaufschlagt werden. Dadurch kann der Kolben 19 in die erste Endposition 28 verschoben werden, wie dies in Fig. 2 dargestellt ist.

In einem weiteren Zyklus kann die soeben beschriebene Bearbeitungsabfolge von neuem gestartet werden.

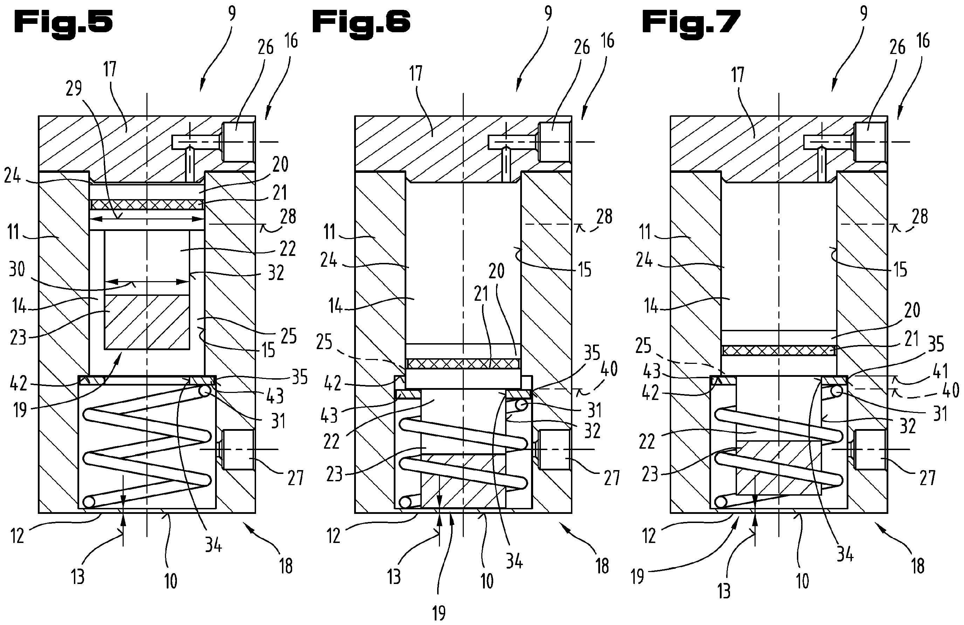

In den Fig. 5 bis 7 ist ein zweites Ausführungsbeispiel des Magnetgreifers 9 in verschiedenen Stellungen dargestellt, wobei wiederum für gleiche Teile gleiche Bezugszeichen bzw. Bauteilbezeichnungen wie in den vorangegangenen Fig. 2 bis 4 verwendet werden. Um unnötige Wiederholungen zu vermeiden, wird auf die detaillierte Beschreibung in den vorangegangenen Fig. 2 bis 4 hingewiesen bzw. Bezug genommen.

Die Stellung der Fig. 5 korrespondiert hierbei mit der Stellung der Fig. 2, wobei sich der Kolben 19 in der ersten Endposition 28 befindet.

Die Stellung der Fig. 6 korrespondiert mit der Stellung der Fig. 3, wobei sich der Kolben 19 in der zweiten Endposition 40 befindet.

Die Stellung der Fig. 7 korrespondiert mit der Stellung der Fig. 3, wobei sich der Kolben 19 in der Zwischenposition 41 befindet.

Wie aus den Fig. 5 bis 7 ersichtlich, ist der Grundaufbau, insbesondere des Gehäuses 11 und des Kolbens 19, dieses zweiten Ausführungsbeispiels des Magnetgreifers 9 ähnlich zum ersten Ausführungsbeispiel nach den Fig. 2 bis 4.

Im zweiten Ausführungsbeispiel ist die Druckfeder 31 jedoch direkt im Kolbenaufnahmehohlraum 14 positioniert. Hierbei ist im Kolbenaufnahmehohlraum 14 ein Anschlag 42 ausgebildet und ein Anlagering 43 im Kolbenaufnahmehohlraum 14 verschiebbar aufgenommen. Die Druckfeder 31 ist zwischen dem Gehäuseboden 12 und dem Anlagering 43 angeordnet, insbesondere stützt sich die Druckfeder 31 am Gehäuseboden 12 ab und drückt den Anlagering 43 zum Anschlag 42.

Der Anschlag 42 ist hierbei so positioniert, dass bei einer Verschiebung des Kolbens 19 in die zweite Endposition 40 der Anlagering 43 am Kolbenkopf 20 zur Anlage kommt und von diesem vom Anschlag 42 entfernt wird. Hierbei wird die Druckfeder 31 komprimiert und somit vorgespannt. Wenn nun am ersten Pneumatikanschluss 26 der Pneumatikdruck entfernt wird, wird der Kolben 19 durch die Federkraft der Druckfeder 31 in die Zwischenposition 41 verschoben, wobei der Anlagering 43 am Anschlag 42 zur Anlage kommt.

Besonders beim zweiten Ausführungsbeispiel kann das Gehäuse 11 eine weitere Teilung aufweisen, welche jedoch in den Figuren nicht dargestellt wurde. Die weiter Teilung kann im Bereich des Gehäusebodens oder im Bereich des Anschlages 42 ausgebildet sein.

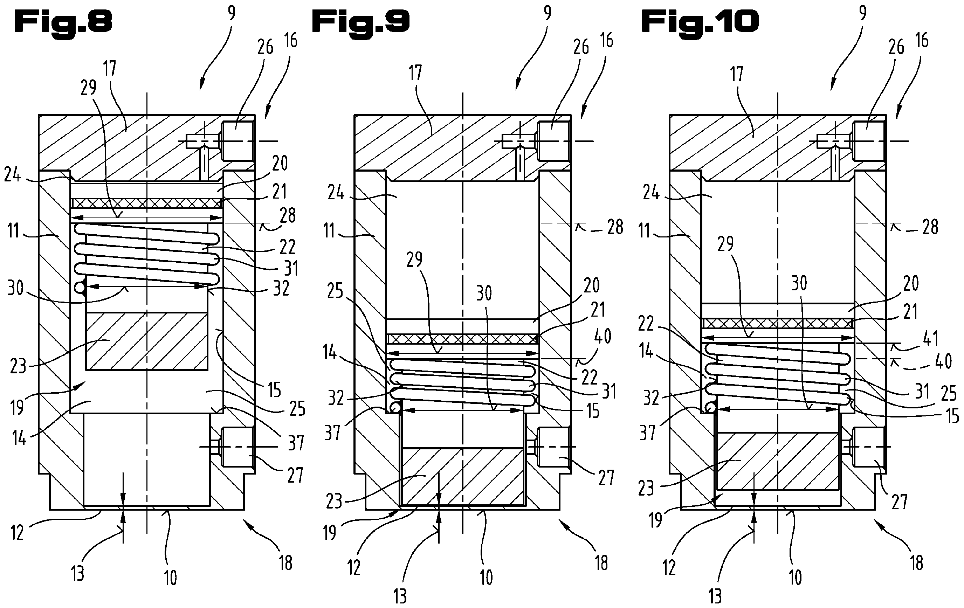

In den Fig. 8 bis 10 ist ein drittes Ausführungsbeispiel des Magnetgreifers 9 dargestellt, wobei wiederum für gleiche Teile gleiche Bezugszeichen bzw. Bauteilbezeichnungen wie in den vorangegangenen Fig. 2 bis 4 verwendet werden. Um unnötige Wiederholungen zu vermeiden, wird auf die detaillierte Beschreibung in den vorangegangenen Fig. 2 bis 4 hingewiesen bzw. Bezug genommen.

Das dritte Ausführungsbeispiel der Fig. 8 bis 10 weist einen grundsätzlich ähnlichen Aufbau zum Ausführungsbeispiel Fig. 2 bis 4 auf.

Im Gegensatz zum ersten Ausführungsbeispiel der Fig. 2 bis 4 ist im dritten Ausführungsbeispiel der Fig. 8 bis 10 jedoch kein Anschlagring 33 vorhanden und auch keine Anschlagringbegrenzung 36 vorhanden. Die Druckfeder 31 wird hierbei in der zweiten Endposition 40 nach Fig. 9 direkt an der Abstufung 37 zur Anlage gebracht. Insbesondere kann hierbei vorgesehen sein, dass der erste Gang und der letzte Gang der Druckfeder 31 abgeflacht sind, sodass die Druckfeder 31 eine möglichst kippfreie Axialkraft aufbringen kann. Weiters kann hierbei vorgesehen sein, dass die Druckfeder 31 mittels eines Befestigungsmittels oder durch eine stoffschlüssige Verbindung am Kolbenkopf 20 befestigt ist.

In einer vierten, nicht dargestellten Ausführungsvariante kann auf Basis der zweiten Ausführungsvariante der Fig. 5 bis 7 in Anlehnung an die dritte Ausführungsvariante der Fig. 8 bis 10 der Anlagering 43 weggelassen werden, wobei der Kolbenkopf 20 in der zweiten Endposition 40 direkt an der Druckfeder 31 zur Anlage gebracht werden kann.

Im ersten und zweiten Ausführungsbeispiel des Magnetgreifers 9 wird die Lage der Zwischenposition 41 durch die Position der Abstufung 37 bzw. durch die Position des Anschlages 42 vorgegeben. Hierbei kann vorgesehen sein, dass die Druckfeder 31, wenn sich der Kolben 19 in der ersten Endposition 28 befindet, geringfügig komprimiert bzw. vorgespannt ist. alternativ dazu ist es hierbei natürlich auch denkbar, dass in diesem Zustand die Druckfeder 31 zur Gänze entspannt ist.

Im dritten und vierten Ausführungsbeispiel des Magnetgreifers 9 wird die Lage der Zwischenposition 41 durch die Länge der Druckfeder 31 vorgegeben. Hierbei kann vorgesehen sein, dass wenn sich der Kolben 19 in der ersten Endposition 28 befindet, die Druckfeder 31 vollständig entspannt bzw. nicht komprimiert ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Fertigungsanlage | 32 | Anschlagringaufnahme |
| 2 | Bearbeitungsmaschine | 33 | Anschlagring |
| 3 | Manipulationsroboter | 34 | Innenmantelfläche Anschlagring |
| 4 | Blechwerkstück | 35 | Außenmantelfläche Anschlagring |
| 5 | Blechstapel | 36 | Anschlagringbegrenzung |
| 6 | Fertigteilstapel | 37 | Abstufung |
| 7 | Tragarm | 38 | Aufnahmenut |
| 8 | Tragteil | 39 | Sicherungsring |
| 9 | Magnetgreifer | 40 | zweite Endposition |
| 10 | Werkstückanlagefläche | 41 | Zwischenposition |
| 11 | Gehäuse | 42 | Anschlag |
| 12 | Gehäuseboden | 43 | Anlagering |
| 13 | Wandstärke | 44 | erster Abstand |
| 14 | Kolbenaufnahmehohlraum | 45 | Stirnfläche |
| 15 | Kolbenaufnahmeinnenfläche | 46 | zweiter Abstand |
| 16 | erste Gehäuseseite | 47 | Innenfläche |
| 17 | Deckel | | |
| 18 | zweite Gehäuseseite | | |
| 19 | Kolben | | |
| 20 | Kolbenkopf | | |
| 21 | Kolbendichtung | | |
| 22 | Kolbenkörper | | |
| 23 | Permanentmagnet | | |
| 24 | erste Kolbenkammer | | |
| 25 | zweite Kolbenkammer | | |
| 26 | erster Pneumatikanschluss | | |
| 27 | zweiter Pneumatikanschluss | | |
| 28 | erste Endposition | | |
| 29 | Kolbenkopfdurchmesser | | |
| 30 | Kolbenkörperdurchmesser | | |
| 31 | Druckfeder | | |

## Patentansprüche

1. Magnetgreifer (9) mit Pneumatikaktivierung umfassend:
ein Gehäuse (11) mit einem Gehäuseboden (12) und einem Kolbenaufnahmehohlraum (14), wobei der Kolbenaufnahmehohlraum (14) durch eine Kolbenaufnahmeinnenfläche (15) begrenzt ist, wobei im Gehäuse (11) ein erster Pneumatikanschluss (26) ausgebildet ist, welcher in den Kolbenaufnahmehohlraum (14) einmündet, wobei an einer Außenseite des Gehäusebodens (12) eine Werkstückanlagefläche (10) ausgebildet ist;
einen Kolben (19) mit einem Kolbenkopf (20) und einem Kolbenkörper (22) und einem mit dem Kolbenkörper (22) gekoppelten Permanentmagneten (23), wobei am Kolbenkopf (20) eine Kolbendichtung (21) angeordnet ist, welche zwischen dem Kolbenkopf (20) und der Kolbenaufnahmeinnenfläche (15) wirkt,
wobei der Kolben (19) zwischen einer ersten Endposition (28) und einer zweiten Endposition (40) verschiebbar im Kolbenaufnahmehohlraum (14) aufgenommen ist, wobei der Kolbenaufnahmehohlraum (14) durch den Kolbenkopf (20) in eine erste Kolbenkammer (24) und eine zweite Kolbenkammer (25) geteilt ist, wobei der Permanentmagnet (23) in der zweiten Endposition (40) des Kolbens (19) am Gehäuseboden (12) anliegt,
**dadurch gekennzeichnet, dass**
eine Druckfeder (31) ausgebildet ist, welche in der zweiten Endposition (40) des Kolbens (19) komprimiert ist und auf den Kolben (19) wirkt, wobei die Druckfeder (31) den Kolben (19) in eine Zwischenposition (41) zwischen der ersten Endposition (28) und der zweiten Endposition (40) drängt, wobei die Druckfeder (31) derart ausgebildet ist, dass sie den Kolben (19) nicht über die Zwischenposition (41) hinaus zur ersten Endposition (28) drängt.

2. Magnetgreifer (9) nach Anspruch 1, **dadurch gekennzeichnet, dass** die Druckfeder (31) zwischen dem Kolbenkopf (20) und dem Gehäuseboden (12) innerhalb des Kolbenaufnahmehohlraumes (14) positioniert ist.

3. Magnetgreifer (9) nach Anspruch 1 oder 2, **dadurch gekennzeichnet, dass** am Kolbenkörper (22) eine Anschlagringaufnahme (32) ausgebildet ist, wobei ein Anschlagring (33) verschiebbar an der Anschlagringaufnahme (32) aufgenommen ist, wobei am Kolbenkörper (22) eine Anschlagringbegrenzung (36) ausgebildet ist, wobei zwischen dem Anschlagring (33) und dem Kolbenkopf (20) eine Druckfeder (31) angeordnet ist, wobei die Druckfeder (31) den Anschlagring (33) gegen die Anschlagringbegrenzung (36) drückt,
wobei im Kolbenaufnahmehohlraum (14) eine Abstufung (37) ausgebildet ist, wobei in der Zwischenposition (41) des Kolbens (19) der Anschlagring (33) an der Abstufung (37) anliegt und der Anschlagring (33) an der Anschlagringbegrenzung (36) anliegt und wobei in der zweiten Endposition (40) des Kolbens (19) der Anschlagring (33) an der Abstufung (37) anliegt und der Anschlagring (33) in einem Abstand von der Anschlagringbegrenzung (36) entfernt ist.

4. Magnetgreifer (9) nach Anspruch 1 oder 2, **dadurch gekennzeichnet, dass** im Kolbenaufnahmehohlraum (14) ein Anschlag (42) ausgebildet ist, wobei die Druckfeder (31) im Kolbenaufnahmehohlraum (14) zwischen dem Anschlag (42) und dem Gehäuseboden (12) positioniert ist und wobei im Kolbenaufnahmehohlraum (14) ein Anlagering (43) angeordnet ist, wobei die Druckfeder (31) den Anlagering (43) gegen den Anschlag (42) drückt,
wobei in der Zwischenposition (41) des Kolbens (19) der Anlagering (43) am Anschlag (42) anliegt und wobei in der zweiten Endposition (40) des Kolbens (19) der Anlagering (43) am Kolbenkopf (20) anliegt und der Anlagering (43) in einem Abstand vom Anschlag (42) entfernt ist.

5. Magnetgreifer (9) nach Anspruch 1 oder 2, **dadurch gekennzeichnet, dass** am Kolbenkörper (22) eine Druckfeder (31) angeordnet ist, wobei die Druckfeder (31) am Kolbenkopf (20) befestigt ist,
wobei im Kolbenaufnahmehohlraum (14) eine Abstufung (37) ausgebildet ist, wobei in der Zwischenposition (41) des Kolbens (19) die Druckfeder (31) an der Abstufung (37) anliegt und wobei in der zweiten Endposition (40) des Kolbens (19) die Druckfeder (31) an der Abstufung (37) anliegt und komprimiert ist.

6. Magnetgreifer (9) nach einem der vorhergehenden Ansprüche, **dadurch gekennzeichnet, dass** das Gehäuse (11) an der zum Gehäuseboden (12) abgewandten Seite mit einem Deckel (17) verschlossen ist.

7. Magnetgreifer (9) nach einem der vorhergehenden Ansprüche, **dadurch gekennzeichnet, dass** der erste Pneumatikanschluss (26) in die erste Kolbenkammer (24) einmündet und dass ein zweiter Pneumatikanschluss (27) ausgebildet ist, welcher in eine zweite Kolbenkammer (25) einmündet.

8. Magnetgreifer (9) nach einem der vorhergehenden Ansprüche, **dadurch gekennzeichnet, dass** die Druckfeder (31) derart positioniert ist, dass der Kolben (19) in der Zwischenposition (41) verbleibt, wenn in der ersten Kolbenkammer (24) und in der zweiten Kolbenkammer (25) Umgebungsdruck herrscht.

9. Magnetgreifer (9) nach Anspruch 3, **dadurch gekennzeichnet, dass** am Kolbenkörper (22) eine Aufnahmenut (38) ausgebildet ist, wobei die Anschlagringbegrenzung (36) in Form eines Sicherungsringes (39) ausgebildet ist, wobei der Sicherungsring (39) in der Aufnahmenut (38) aufgenommen ist.

10. Magnetgreifer (9) nach Anspruch 3, **dadurch gekennzeichnet, dass** eine Außenmantelfläche (35) des Anschlagringes (33) an der Kolbenaufnahmeinnenfläche (15) geführt ist und dass eine Innenmantelfläche (34) des Anschlagringes (33) am Kolbenkörper (22) geführt ist.

11. Magnetgreifer (9) nach einem der vorhergehenden Ansprüche, **dadurch gekennzeichnet, dass** der Kolben (19) rotationssymmetrisch ausgebildet ist, wobei der Kolbenkopf (20) einen Kolbenkopfdurchmesser (29) aufweist, wobei der Kolbenkörper (22) einen Kolbenkörperdurchmesser (30) aufweist, wobei der Kolbenkopfdurchmesser (29) größer ist als der Kolbenkörperdurchmesser (30).

12. Fertigungsanlage (1) umfassend:
eine Bearbeitungsmaschine (2), insbesondere eine Biegemaschine;
einen Manipulationsroboter (3) mit zumindest einem Magnetgreifer (9),
**dadurch gekennzeichnet, dass**
der Magnetgreifer (9) nach einem der vorhergehenden Ansprüche ausgebildet ist.

13. Verfahren zum Abheben eines Blechwerkstückes (4) von einem Blechstapel (5) und Manipulieren des Blechwerkstückes (4), umfassend die Verfahrensschritte:
- Bereitstellen eines Magnetgreifers (9) mit Pneumatikaktivierung umfassend:
ein Gehäuse (11) mit einem Gehäuseboden (12) und einem Kolbenaufnahmehohlraum (14), wobei der Kolbenaufnahmehohlraum (14) durch eine Kolbenaufnahmeinnenfläche (15) begrenzt ist, wobei im Gehäuse (11) ein erster Pneumatikanschluss (26) ausgebildet ist, welcher in den Kolbenaufnahmehohlraum (14) einmündet, wobei an einer Außenseite des Gehäusebodens (12) eine Werkstückanlagefläche (10) ausgebildet ist;
einen Kolben (19) mit einem Kolbenkopf (20) und einem Kolbenkörper (22) und einem mit dem Kolbenkörper (22) gekoppelten Permanentmagneten (23), wobei am Kolbenkopf (20) eine Kolbendichtung (21) angeordnet ist, welche zwischen dem Kolbenkopf (20) und der Kolbenaufnahmeinnenfläche (15) wirkt,
wobei der Kolben (19) zwischen einer ersten Endposition (28) und einer zweiten Endposition (40) verschiebbar im Kolbenaufnahmehohlraum (14) aufgenommen ist, wobei der Kolbenaufnahmehohlraum (14) durch den Kolbenkopf (20) in eine erste Kolbenkammer (24) und eine zweite Kolbenkammer (25) geteilt ist, wobei der Permanentmagnet (23) in der zweiten Endposition (40) des Kolbens (19) am Gehäuseboden (12) anliegt, wobei eine Druckfeder (31) ausgebildet ist, welche in der zweiten Endposition (40) des Kolbens (19) komprimiert ist und auf den Kolben (19) wirkt, wobei die Druckfeder (31) den Kolben (19) in eine Zwischenposition (41) zwischen der ersten Endposition (28) und der zweiten Endposition (40) drängt, wobei die Druckfeder (31) derart ausgebildet ist, dass sie den Kolben (19) nicht über die Zwischenposition (41) hinaus zur ersten Endposition (28) drängt;
- Beaufschlagen des ersten Pneumatikanschlusses (26) mit Druckluft, wodurch der Kolben (19) in die zweite Endposition (40) verschoben wird;
- Entfernen der Druckluftbeaufschlagung vom ersten Pneumatikanschluss (26), oder Anlegen einer Druckbeaufschlagung auf einen zweiten Pneumatikanschluss (27), wodurch der Kolben (19) mittels der Druckfeder (31) in die Zwischenposition (41) verschoben wird;
- Anlegen der Werkstückanlagefläche (10) an das Blechwerkstück (4);
- Abheben des Blechwerkstückes (4) vom Blechstapel (5) mittels des Magnetgreifers (9), wenn sich der Kolben (19) in der Zwischenposition (41) befindet;
- Nach dem Abheben des Blechwerkstückes (4) vom Blechstapel (5) nochmaliges Beaufschlagen des ersten Pneumatikanschlusses (26) mit Druckluft, wodurch der Kolben (19) in die zweite Endposition (40) verschoben wird.

14. Verfahren nach Anspruch 13, **dadurch gekennzeichnet, dass** zum Ablegen des Blechwerkstückes (4) der erste Pneumatikanschluss (26) mit Unterdruck beaufschlagt wird, wodurch der Kolben (19) in die erste Endposition (28) verschoben wird.

15. Verfahren nach Anspruch 13, **dadurch gekennzeichnet, dass** zum Ablegen des Blechwerkstückes (4) die Druckluftbeaufschlagung vom ersten Pneumatikanschluss (26) entfernt wird und dass der zweite Pneumatikanschluss (27) mit Druckluft beaufschlagt wird, wodurch der Kolben (19) in die erste Endposition (28) verschoben wird.
